# EUROPEAN PATENT APPLICATION

(11) **EP 4 459 456 A1**
(43) Date of publication of application: **06.11.2024**
(21) Application number: 22922912.5
(22) Date of filing: 29.01.2022
(51) Int. Cl.: G06F 8/33, G06F 8/35

(54) **DEVICE CONTROL METHOD AND APPARATUS, PLATFORM, AND COMPUTER READABLE MEDIUM**

(71) Applicant: Siemens Aktiengesellschaft, 80333 München (DE)
(72) Inventor: ZHOU, Zhenhua, Shanghai 200120 (CN); ZHU, Xiaoxun, Beijing 100102 (CN); WENG, Changwei, Nanjing, Jiangsu 211100 (CN); LIAO, Liang, Beijing 100073 (CN)
(74) Representative: Isarpatent
(86) International application number: PCT/CN2022/075090
(87) International publication number: WO 2023/142082

(57) **Abstract**

Embodiments of the present application relate to device control technology, in particular to a method and system for extracting production data, a storage medium, and an electronic device. The device control method comprises: receiving a first workflow generated by an OT domain low code development tool; generating a micro-service corresponding to the first workflow, the first workflow being used for defining an operation to be executed by one working unit in the OT domain; receiving a parameter value of the micro-service configured by an IT domain code development platform to obtain a second workflow, so that each OT device connected to the working unit performs an operation according to the second workflow. According to the embodiments of the present application, an OT domain process can be conveniently and quickly controlled by means of an IT device, so that a specific operation of the related OT device is controlled.

## Description

### TECHNICAL FIELD

Embodiments of this application mainly relate to the field of device control technology, and in particular to a device control method and apparatus, a platform, and a computer readable medium.

### BACKGROUND

According to Gartner's definition, Operational Technology (OT), which integrates hardware and software, detects or triggers a change of a process or an event in an enterprise through direct monitoring and/or control of physical devices (referred to as OT devices). OT uses computers to monitor or change a physical state of an Industrial Control System (ICS). The ICS is a computer-based facility, system and device, which is used for remotely monitoring and/or controlling key industrial processes so as to realize physical functions. The term "OT" is used to distinguish the ICS from the traditional Information Technology (IT) system in terms of technical implementation and functionality.

The integration of IT domain and OT domain has become increasingly important in the process of digital transformation of enterprises. An urgent problem is how to collect data in the OT domain and control the OT domain process in an easy-to-understand way instead of rr domain programming.

At present, there are many IT low code development tools or platforms in the market. Some tools are targeted at loT usage scenarios for experienced IT engineers, and it is difficult for OT engineers and junior IT engineers to understand their paradigms. However, some tools are more suitable for usage scenarios of low code development of the IT domain, but not for the OT domain.

Therefore, there is an urgent need for a low code development scheme suitable for the OT domain, especially how to control an OT domain process conveniently by way of IT devices.

### SUMMARY

Embodiments of this application provides a device control method and apparatus, a platform, and a computer readable medium, in order to solve the problem of how to control an OT domain process conveniently by way of IT devices.

In a first aspect, a device control method is provided, including: receiving a first workflow generated by an OT domain low code development tool; generating a micro-service corresponding to the first workflow, the first workflow being used for defining an operation to be performed by one working unit in the OT domain; receiving a parameter value of the micro-service configured by an IT domain code development platform; and generating a second workflow according to the parameter value of the micro-service configured by the IT domain code development platform, so that each OT device connected to the working unit performs an operation according to the second workflow.

In a second aspect, a device control platform is provided, including: at least one memory, configured to store computer readable codes; and at least one processor, configured to call the computer readable codes to perform steps in the method provided by the first aspect.

In a third aspect, a computer readable medium is provided, storing computer readable instructions. The computer readable instructions, when executed by a processor, cause the processor to perform steps in the method provided by the first aspect.

In a fourth aspect, a computer program product is provided, tangibly stored on a computer readable medium and including computer readable instructions. The computer readable instructions, when executed, cause at least one processor to perform steps in the method provided by the first aspect.

In a fifth aspect provides a device control apparatus is provided, including components for performing the steps of the method provided by the first aspect.

According to the embodiments of this application, an OT domain process can be conveniently and quickly controlled by way of an IT device, so that a specific operation of the related OT device is controlled.

### BRIEF DESCRIPTION OF THE DRAWINGS

The following accompanying drawings are only intended to give schematic illustrations and explanations of the embodiments of this application, but are not intended to limit the scope of the embodiments of this application. In the figures:
FIG. 1 is a flowchart of a device control method according to an embodiment of this application;
FIG. 2 is a schematic diagram of a device control apparatus according to an embodiment of this application; and
FIG. 3 is a schematic diagram of a device control platform according to an embodiment of this application.

**Descriptions of reference numerals:**

| | | | | | |
|---|---|---|---|---|---|
| 100: | Device control method | 110-140: | Method steps | | |
| 20: | Device control apparatus | 23: | OT domain low code development tool | 21: | Micro-service generator |
| 22: | Working unit controller | 24: | IT domain code development platform | | |
| 300: | Device control platform | 301: | Memory | 302: | Processor |

### DETAILED DESCRIPTION

A subject described in this specification is discussed now with reference to exemplary implementations. It should be understood that, discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of the embodiments of this application. Various processes or components may be omitted, replaced, or added in each example according to requirements. For example, the described method may be performed according to a sequence different from the sequence described herein, and steps may be added, omitted, or combined. In addition, features described in some examples may also be combined in other examples.

As used in this specification, the term "include" and variants thereof represent open terms, meaning "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The following describes the embodiments of this application with reference to the accompanying drawings.

OT devices may include, but not limited to, Internet of Things (IoT) devices, Programmable Logic Controllers (PLCs), Robotics, Manual Processes, Industrial Personal Computers (IPCs), etc.

Moreover, the concept of "working unit" is proposed, which makes the development closer to a relatively complete and independent control process and operation, more in line with the characteristics of industrial control, improves the integration level of development and reduces the complexity of development. Here, the working unit may be defined according to the actual industrial scenario, for example, one station on the production line corresponds to one work unit, and different working units have different technical processes.

The applicable fields of the embodiments of this application include, but not limited to, Industrial Automation, Logistics, Laboratory, Maritime, Smart Grid, Electric Vehicle Infrastructure, Electric Vehicle, Building Automation, Smart City, Water Treatment, Garbage Recycling, Smart Farm, etc.

IT devices may include, but not limited to, a Manufacturing Operation Management (MOM) system, a manufacturing execution system (MES), an Enterprise Resource Planning (ERP) system, an Enterprise Service Bus (ERP), a Product Lifecycle Management (PLM) system, etc.

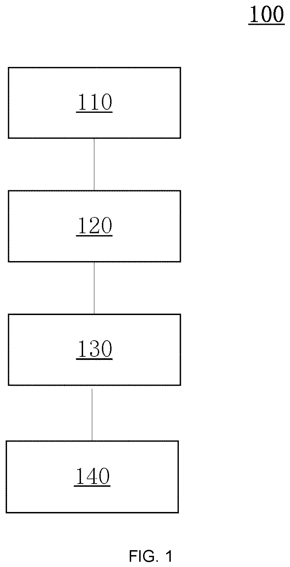

FIG. 1 is a flowchart of a device control method according to an embodiment of this application. As shown in FIG. 1, the device control method includes the following:
Step 110: A first workflow generated by an OT domain low code development tool is received.

A low code development tool is essentially computer software, which can be deployed on an industrial personal computer (IPC) or a single board computer (SBC). The OT domain low code development tool provides a graphical user interface for users to perform OT domain low code development.

The first workflow includes: the first workflow including a default parameter value and a preset parameter value range. The default parameter value refers to the parameter value without any setting. The preset parameter range may be set according to the actual situation.

Step 120: A micro-service corresponding to the first workflow is generated. The first workflow is used for defining an operation to be performed by one working unit in the OT domain.

Optionally, after step 120, an interface recognizable by an IT domain code development platform may be generated to establish communication with the IT domain code development platform.

Step 130: A parameter value of the micro-service configured by an IT domain code development platform is received.

Step 140: A second workflow is generated according to the parameter value of the micro-service configured by the IT domain code development platform, so that each OT device connected to the working unit performs an operation according to the second workflow.

That is, the default parameter value in the first workflow is replaced with the parameter value of the micro-service configured by the IT domain code development platform to obtain the second workflow. In an example of a screwing scenario, in order to make the related OT device connected to the working unit complete the screwing operation, the parameter value of the micro-service configured by the IT domain code development platform may include: a pressure value, quantity and force of screwing, so that the related OT device connected to the working unit performs the specific operation according to the related set parameter value.

Optionally, after step 130, the second workflow is activated within the preset parameter value range when receiving a call instruction sent by the IT domain code development platform, so that each OT device connected to the working unit performs the operation according to the second workflow. By controlling the parameter of the specific workflow to be performed by the related OT device within the preset parameter value range, misconfiguration of the IT domain code development platform can be avoided, and normal operation of the related OT device can be ensured.

Optionally, after step 130, the second workflow may be backed up to a runtime of the working unit. The second workflow in the runtime of the working unit is activated within the preset parameter value range when receiving the call instruction sent by the IT domain code development platform, so that each OT device connected to the working unit performs the operation according to the second workflow. Optionally, the runtime of the working unit may be deployed on an embedded loT device, such as a Single Board Computer (SBC). By way of the runtime of the working unit, the OT domain workflow can be implemented easily, and openness can be provided based on the ecosystem of an open source community (such as Python).

In the traditional method, the IT domain code development platform typically needs to control the OT domain process by tedious and complicated programming. In this embodiment of this application, the user can conveniently and quickly control the OT domain process simply by configuring the parameter value of the micro-service in the OT domain in the IT domain code development platform, i.e., the IT device, thereby controlling the specific operation of the related OT device. The whole operation process is easy to understand, which greatly saves users' time and energy.

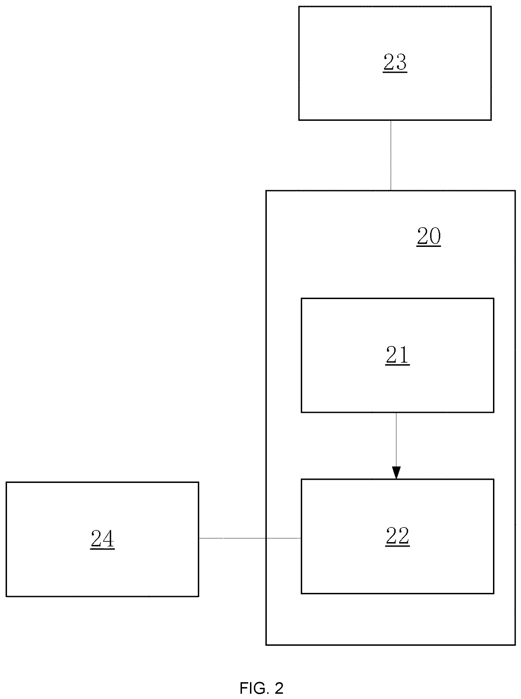

FIG. 2 is a schematic diagram of a device control apparatus 20 according to an embodiment of this application. As shown in FIG. 2, the device control apparatus 20 includes:
a micro-service generator 21, configured to: receive a first workflow generated by an OT domain low code development tool 23, and generate a micro-service corresponding to the first workflow, the first workflow being used for defining an operation to be performed by one working unit in the OT domain; and
a working unit controller 22, configured to: receive a parameter value of the micro-service configured by an IT domain code development platform 24 to generate a second workflow, so that each OT device connected to the working unit performs an operation according to the second workflow.

Optionally, the device control apparatus 20 may further include a runtime, configured to: activate the second workflow when receiving a call instruction sent by the IT domain code development platform 24, so that each OT device connected to the working unit performs the operation according to the second workflow.

Optionally, the device control apparatus 20 may further include an interface generator, configured to: generate an interface recognizable by the IT domain code development platform 24 after the micro-service generator 21 generates the micro-service corresponding to the first workflow. Optionally, the interface generator may use modern interpreted or compiled programming languages to generate a standard API such as Open API or RPC.

In some embodiments, the working unit controller 22, the interface generator and the runtime may be deployed in a same physical location, for example, a container based on a cloud platform or an edge device, to form an independent micro-service platform, thereby independently performing the corresponding functions, which is more convenient to use.

In some embodiments, in addition to the micro-service generator 21, the working unit controller 22 and the interface generator, the device control apparatus 20 further includes: a backup module, configured to: back up the second workflow to the runtime of the working unit; and an activation module, configured to: activate the second workflow in the runtime of the working unit when receiving the call instruction sent by the IT domain code development platform, so that each OT device connected to the working unit performs the operation according to the second workflow. The working unit controller 22, the interface generator, the backup module and the activation module may be deployed in a same physical location to form an independent micro-service platform, which may be used for activating the corresponding workflow in the runtime of the working unit by using a web server as a host. Optionally, the runtime of the working unit may be installed and deployed on a target edge device, i.e., the micro-service platform and the runtime of the working unit may be separately deployed in different locations. With the above structure, the micro-service platform itself is flexible and very lightweight. Optionally, the micro-service platform and the runtime of the working unit may also be deployed in a same device server, and they can be conveniently and quickly separated when the physical resources of the device server are not enough to support the runtime.

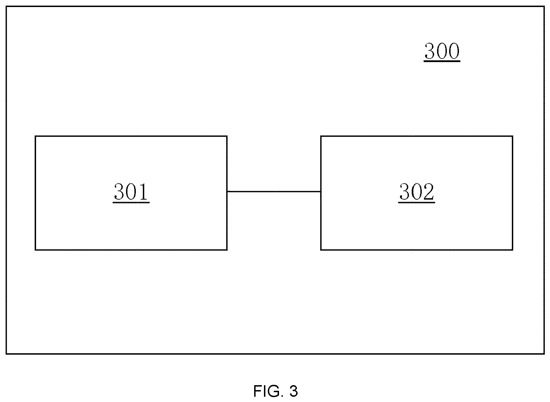

The disclosure further provides a device control platform 300. FIG. 3 is a schematic diagram of a device control platform 300 according to an embodiment of this application. As shown in FIG. 3, the device control platform 300 includes a processor 302 and a memory 301. The memory 301 stores instructions therein. The instructions, when executed by a processor 302, implement the method 100 as described above.

The at least one processor 302 may include a microprocessor, an application-specific integrated circuit (ASIC), a digital signal processor (DSP), a central processing unit (CPU), a graphics processing unit (GPU), a state machine, etc. Examples of the computer readable medium include, but not limited to, a floppy disk, a CD-ROM, a magnetic disk, a memory chip, a ROM, a RAM, an ASIC, a configured processor, an all-optical medium, all magnetic tapes or other magnetic media, or any other medium from which a computer processor can read instructions. In addition, various other forms of computer readable media may send or carry instructions to computers, including routers, private or public networks, or other wired and wireless transmission devices or channels. The instructions may include codes of any computer programming language, including C, C++, C language, Visual Basic, java, and JavaScript.

In addition, an embodiment of this application further provides a computer readable medium. The computer readable medium stores computer readable instructions thereon. The computer readable instructions, when executed by a processor, cause the processor to perform the OT domain low code development method described above. The examples of the computer readable medium include a floppy disk, a hard disk, a magneto-optical disk, an optical disk (for example, a CD-ROM, a CD-R, a CD-RW, a DVD-ROM, a DVD-RAM, a DVD-RW, or a DVD-RW), a magnetic tape, a non-volatile storage card, and a ROM. Optionally, the computer readable instructions may be downloaded from a server computer or cloud through a communication network.

It should be noted that not all the steps and modules in the processes and the diagrams of the system structures above are necessary, and some steps or modules may be omitted according to actual needs. The execution sequence of the steps is not fixed and can be adjusted according to needs. The system structures described in the foregoing embodiments may be physical structures or logical structures, i.e., some modules may be implemented by the same physical entity, or some modules may be implemented by multiple physical entities, or may be implemented jointly by some components in multiple independent devices.

## Claims

1. A device control method, comprising:
- receiving (110) a first workflow generated by an OT domain low code development tool;
- generating (120) a micro-service corresponding to the first workflow, the first workflow being used for defining an operation to be performed by one working unit in the OT domain;
- receiving (130) a parameter value of the micro-service configured by an IT domain code development platform; and
- generating (140) a second workflow according to the parameter value of the micro-service configured by the IT domain code development platform, so that each OT device connected to the working unit performs an operation according to the second workflow.

2. The method according to claim 1, wherein after obtaining the second workflow, the method further comprises:
- activating the second workflow when receiving a call instruction sent by the IT domain code development platform, so that each OT device connected to the working unit performs the operation according to the second workflow.

3. The method according to claim 1, wherein after obtaining the second workflow, the method further comprises:
- backing up the second workflow to a runtime of the working unit; and
- activating the second workflow in the runtime of the working unit when receiving a call instruction sent by the IT domain code development platform, so that each OT device connected to the working unit performs the operation according to the second workflow.

4. The method according to claim 3, wherein
- the first workflow comprises:
- the first workflow comprising a default parameter value and a preset parameter value range; and
- the activating the second workflow in the runtime of the working unit comprises:
- activating the runtime of the working unit within the preset parameter value range.

5. The method according to claim 1, wherein after generating the micro-service corresponding to the first workflow, the method further comprises: generating an interface recognizable by the IT domain code development platform.

6. A device control apparatus, comprising:
- a micro-service generator (21), configured to:
- receive a first workflow generated by an OT domain low code development tool (23); and
- generate a micro-service corresponding to the first workflow, the first workflow being used for defining an operation to be performed by one working unit in the OT domain; and
- a working unit controller (22), configured to:
- receive a parameter value of the micro-service configured by an IT domain code development platform (24) to obtain a second workflow, so that each OT device connected to the working unit performs an operation according to the second workflow.

7. The apparatus according to claim 1, further comprising:
- a runtime, configured to:
- activate the second workflow when receiving a call instruction sent by the IT domain code development platform (24), so that each OT device connected to the working unit performs the operation according to the second workflow.

8. The apparatus according to claim 1, further comprising:
- an interface generator, configured to:
- generate an interface recognizable by the IT domain code development platform (24) after the micro-service generator (21) generates the micro-service corresponding to the first workflow.

9. A device control platform, comprising:
at least one memory (301), configured to store computer readable codes; and
at least one processor (302), configured to call the computer readable codes to perform steps in the method according to any one of claims 1 to 5.

10. A computer readable medium, storing computer readable instructions, wherein the computer readable instructions, when executed by a processor, cause the processor to perform steps in the method according to any one of claims 1 to 5.

11. A computer program product, tangibly stored on a computer readable medium and comprising computer readable instructions, wherein the computer readable instructions, when executed, cause at least one processor to perform the method according to any one of claims 1 to 5.
